# EUROPÄISCHE PATENTANMELDUNG

(11) **EP 4 818 656 A1**
(43) Veröffentlichungstag der Anmeldung: **07.10.2026**
(21) Anmeldenummer: 26169755.1
(22) Anmeldetag: 31.03.2026
(51) Int. Cl.: G01K 1/02, G01K 7/02, G01K 7/04, G01K 7/13

(54) **MESSANORDNUNG ZUR ORTSAUFGELÖSTEN TEMPERATURMESSUNG**

(30) Priorität: 01.04.2025 DE 102025112743
(71) Anmelder: Benecke-Kaliko GmbH, 30419 Hannover (DE)
(72) Erfinder: Dr. Kneer, Janosch, 30419 Hannover (DE); Rösch, Simon, 30419 Hannover (DE); Kegel, Isabell, 30419 Hannover (DE); Gerez Marr, Oscar, 30175 Hannover (DE)
(74) Vertreter: Preusser, Andrea

(57) **Zusammenfassung**

Die Erfindung betrifft eine Messanordnung (1) zur ortsaufgelösten Temperaturmessung, aufweisend eine Mehrzahl n an Thermoelementen, wobei jedes Thermoelement einen ersten Schenkel (2) aus einem ersten elektrisch leitfähigen Material und einen zweiten Schenkel (4) aus einem zweiten elektrisch leitfähigen Material aufweist, wobei der erste Schenkel (2) und der zweite Schenkel (4) jeweils an einem ersten Ende zu einer Messstelle (6) miteinander verbunden sind. Die Thermoelemente sind über ein zweites Ende des jeweils ersten Schenkels (2) und des zweiten Schenkels (4) mit einer Anzahl von höchstens y=n+1 Kontaktstellen (7, 8, 9, 11, 12, 13) mit einer Auswerteelektronik verbindbar.

## Beschreibung

Die Erfindung betrifft eine Messanordnung zur ortsaufgelösten Temperaturmessung gemäß dem Oberbegriff des Anspruchs 1. Die Erfindung betrifft außerdem eine mehrschichtige Verbundfolie.

Thermoelemente sind eine der gängigsten Ausführungsformen von Temperatursensoren. Sie sind robust, kompakt, günstig herstellbar, können einen breiten Temperaturbereich abdecken und werden dadurch in einer Vielzahl an Anwendungen eingesetzt, beispielsweise der Regelung einer Heizung. Ein gängiges Thermoelement umfasst zwei Metalldrähte, sogenannte Schenkel, die an einem Ende zu einer Messstelle miteinander verbunden sind. An der Messstelle liegt eine elektrische Spannung an, die von der Temperatur an dieser Stelle abhängig ist. Das andere Ende der Schenkel bildet eine Referenzstelle oder auch Kaltstelle, deren Temperatur bekannt ist und über einen Referenzsensor gemessen werden kann.

Thermoelemente nutzen den Seebeck-Effekt, bei dem eine elektrische Spannung aufgrund eines Temperaturgefälles entlang eines elektrischen Leiters entsteht. Die Spannung, die zwischen den beiden Enden der Metalldrähte gemessen wird, ist proportional zur Temperaturdifferenz zwischen der Messstelle und der Referenzstelle. Diese Spannung wird zur Berechnung der Temperatur verwendet.

Die US 6425 687 B1 offenbart ein System zum Messen der Durchschnittstemperatur mit einer Vielzahl von Thermoelementen, die parallel zu einer Messvorrichtung durch zwei Signaldrähte verbunden sind. Kompensationsthermoelemente befinden sich an Kaltstellen der Thermoelemente und sind mit der Messvorrichtung verbunden. Nachteiliger Weise muss jedes Thermoelement an der Referenzstelle an jeweils zwei Kontaktstellen mit den Signaldrähten verbunden werden, wodurch der Aufwand zur Integration mehrerer Thermoelemente aufgrund der Vielzahl an Kontaktstellen besonders groß ist. Jede Kontaktstelle kann zudem eine potenzielle Schwachstelle darstellen, die zu Fehlfunktionen führen kann.

Es sind außerdem verschiedene Lösungen bekannt, bei denen die vergleichsweise starren und unflexiblen Drähte eines Thermoelements durch gedruckte elektrisch leitfähige Strukturen ersetzt werden, wie beispielsweise in der WO 2016084342 A1, CA 2566967 A1 und US 11183625 B2 offenbart.

Der Erfindung liegt die Aufgabe zugrunde, eine Messanordnung zur ortsaufgelösten Temperaturmessung bereitzustellen, die eine hohe Funktionssicherheit und einen geringen Integrationsaufwand ermöglicht. Insbesondere liegt die Aufgabe darin, die Anzahl der Kontaktstellen der Thermoelemente zu reduzieren.

Die Lösung dieser Aufgabe ergibt sich durch eine Messanordnung mit den Merkmalen des unabhängigen Anspruchs 1.

Weitere vorteilhafte Ausbildungen sind in den abhängigen Ansprüchen offenbart. Anspruch 6 offenbart außerdem eine mehrschichtige Verbundfolie mit einer erfindungsgemäßen Messanordnung.

Die vorliegende Erfindung betrifft eine Messanordnung zur ortsaufgelösten Temperaturmessung, aufweisend eine Mehrzahl n an Thermoelementen, wobei jedes Thermoelement einen ersten Schenkel aus einem ersten elektrisch leitfähigen Material und einen zweiten Schenkel aus einem zweiten elektrisch leitfähigen Material aufweist, wobei der erste Schenkel und der zweite Schenkel jeweils an einem ersten Ende zu einer Messstelle miteinander verbunden sind. Die Thermoelemente sind über ein zweites Ende des jeweils ersten Schenkels und des zweiten Schenkels mit einer Anzahl von höchstens y=n+1 Kontaktstellen mit einer Auswerteelektronik verbindbar.

Das erste elektrisch leitfähige Material und das zweite elektrisch leitfähige Material weisen unterschiedliche Seebeck-Koeffizienten auf. Eine besonders vorteilhafte Kombination ist beispielsweise die Kombination von Nickel oder Silber als erstes elektrisch leitfähiges Material des ersten Schenkels mit einem organischen Halbleiter PEDOT:PSS als zweites elektrisch leitfähiges Material des zweiten Schenkels. Ein Referenzsensor zur Temperaturmessung an einer Referenzstelle oder Kaltstelle kann innerhalb der Auswerteelektronik oder auch innerhalb der elektrisch leitfähigen Struktur der Thermoelemente angeordnet sein. Dies erlaubt eine große Flexibilität in dem Schaltungslayout der Messanordnung.

Gemäß einem weiteren vorteilhaften Aspekt der vorliegenden Erfindung ist zwischen dem zweiten Ende des jeweils ersten Schenkels und des zweiten Schenkels eine elektrische Spannung messbar, wobei ein Referenzsensor zur Temperaturmessung außerhalb der Auswerteelektronik angeordnet ist, wobei der Referenzsensor über eine weitere Kontaktstelle mit der Auswerteelektronik verbindbar ist. Der Referenzsensor weist einen ersten Widerstand und einen zweiten Widerstand auf, wobei der erste Widerstand einen konstanten Widerstandswert und der zweite Widerstand einen temperaturabhängigen Widerstandswert aufweist. Der Referenzsensor kann ein vollständig gedruckter, mittels elektrisch leitfähiger Pasten realisierter Sensor oder ein SMD Bauteil sein, welches mit einem elektrisch leitfähigen Kleber kontaktiert und fixiert werden kann.

Gemäß einem weiteren vorteilhaften Aspekt der vorliegenden Erfindung sind der erste Widerstand und der zweite Widerstand als Spannungsteiler zwischen dem zweiten Ende des jeweils ersten Schenkels und des zweiten Schenkels angeordnet. Der Spannungsteiler wird allgemein durch eine Reihenschaltung von zwei ohmschen Widerständen beschrieben. Genauer gesagt sind der erste Widerstand und der zweite Widerstand in Reihe geschaltet, wodurch die durch das Thermoelement erzeugte elektrische Spannung aufgeteilt wird. Auf vorteilhafte Weise kann die von den Thermoelementen erzeugte Spannung auch zur Auslesung des zweiten temperaturabhängigen Widerstands verwendet werden. Voraussetzung ist, dass der erste Widerstand im Spannungsteiler ein temperaturunabhängiger Konstantwiderstand ist und ein Temperaturgradienten vorliegt. Die Messanordnung kann so besonders energieeffizient und unabhängig einer externen Spannungsversorgung betrieben werden.

Gemäß einem weiteren vorteilhaften Aspekt der vorliegenden Erfindung bildet der zweite Schenkel eines ersten Thermoelements den ersten Schenkel eines zweiten Thermoelements. Mit anderen Worten teilen sich jeweils zwei Thermoelemente einen gemeinsamen Schenkel. Hierdurch kann auf vorteilhafte Weise bei Betrachtung von zwei Thermoelementen die Anzahl der Kontaktstellen von vier auf drei reduziert werden.

Gemäß einem weiteren vorteilhaften Aspekt der vorliegenden Erfindung sind die Schenkel der Thermoelemente als eine gedruckte und aushärtend getrocknete elektrisch leitfähige Struktur ausgebildet. Mit anderen Worten können die Schenkel der Thermoelemente als gedruckte Leiterbahnen vorliegen. Die Leiterbahnen sind aus einer elektrisch leitfähigen Polymerpaste mit elektrisch leitfähigen Additiven gebildet und auf einem Substrat, beispielsweise einer PET oder TPU Folie gedruckt. Auf vorteilhafte Weise können die Thermoelemente so besonders dünn und flexibel ausgebildet sein, um möglichst unsichtbar in Bauteile integriert werden zu können.

Überraschender Weise hat sich herausgestellt, dass der Einfluss des Materials des Substrats auf die Seebeckspannung an der Messstelle vernachlässigbar klein ist. Dies unterscheidet ein gedrucktes Thermoelement von anderen gedruckten Sensoren mit resistivem Wirkprinzip, bei denen das Substrat bzw. die Grenzfläche zwischen dem Substrat und der elektrisch leitfähigen Struktur signifikanten Einfluss auf den elektrischen Sensorwiderstand hat. Die Ausführung des Thermoelements als eine auf einem Substrat gedruckte Struktur ist besonders vorteilhaft, da der Einfluss des Substratmaterials auf die Seebeckspannung des Thermoelements vernachlässigbar ist.

Die Erfindung betrifft außerdem eine mehrschichtige Verbundfolie, aufweisend zumindest eine elektrisch leitfähige Heizschicht und eine erfindungsgemäße Messanordnung. Die Verbundfolie kann beispielsweise eine Dekorfolie oder ein Kunstleder für Fahrzeuganwendungen oder auch zur Beschichtung von dekorativen Oberflächen oder Wohnmöbeln in Gebäuden sein. Die Verbundfolie weist mehrere Schichten auf, wobei jede Schicht jeweils mehrere Lagen aufweisen kann. Die Messanordnung kann beispielsweise auf einem ersten Substrat angeordnet sein. Die Heizschicht kann ein zweites Substrat aufweisen, worauf eine elektrisch leitfähige Struktur aus einer ersten elektrisch leitfähigen Lage und einer zweiten elektrisch leitfähigen Lage angeordnet ist, die sich unter Stromführung aufheizt. Abschließend kann eine elektrisch isolierende Schicht als Oberschicht angeordnet sein, die der Verbundfolie durch eine Oberflächenstruktur ihre optischen und haptischen Eigenschaften verleiht. Die Verbundfolie kann wiederum auf einem Bauteilträger angeordnet sein.

Durch die Messanordnung kann die Temperaturverteilung über die Fläche der Verbundfolie ortsaufgelöst gemessen werden. Beispielsweise kann das Messergebnis als Größe für die Regelung der Temperatur zur Verarbeitung in einer Auswerteelektronik oder Rechenvorrichtung verwendet werden. Um bei der Herstellung der Messanordnung Rüstzeiten und den Materialeinsatz zu optimieren, können das erste elektrisch leitfähige Material des ersten Schenkels bzw. das zweite elektrisch leitfähige Material des zweiten Schenkels aus denselben Materialien gebildet sein, wie die erste elektrisch leitfähige Lage und die zweite elektrisch leitfähige Lage der Heizschicht. Diese weisen häufig eine Lage aus Silber und eine Lage aus Carbon auf. Hier ist auch das notwendige Kriterium der unterschiedlichen Seebeck-Koeffizienten erfüllt. Die beiden Schenkel des Thermoelements können also vorteilhaft aus den jeweils verschiedenen Materialien der elektrisch leitfähigen Lagen der Heizschicht ausgebildet sein.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 kombinierbar sind.

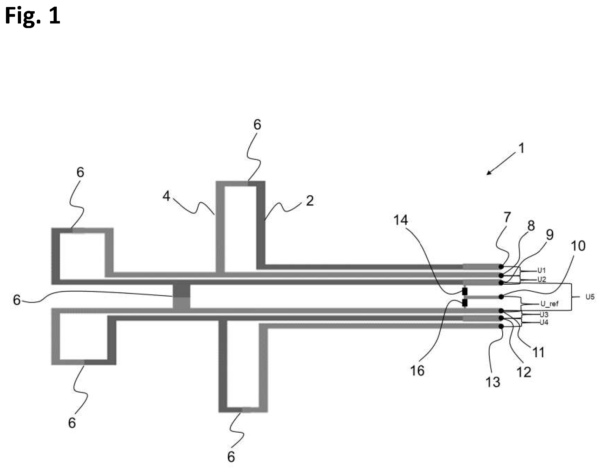

Anhand der Zeichnung wird im Folgenden ein Ausführungsbeispiel der Erfindung schematisch dargestellt und näher erläutert. Darin zeigt Figur 1 eine schematische Darstellung einer erfindungsgemäßen Messanordnung aus fünf Thermoelementen.

Die Messanordnung 1 weist eine Anordnung von fünf Thermoelementen auf, wobei jedes Thermoelement einen ersten Schenkel 2 aus einem ersten elektrisch leitfähigen Material und einen zweiten Schenkel 4 aus einem zweiten elektrisch leitfähigen Material aufweist. Der erste Schenkel 2 und der zweite Schenkel 4 sind jeweils an einem ersten Ende zu einer Messstelle 6 miteinander verbunden. Der zweite Schenkel 4 eines ersten Thermoelements bildet gleichzeitig den ersten Schenkel 2 eines zweiten Thermoelements. Dadurch, dass sich jeweils zwei Thermoelemente einen gemeinsamen Schenkel 2, 4 teilen, verfügt die Messanordnung 1 mit den fünf Thermoelementen nur über sechs Kontaktstellen 7, 8, 9, 11, 12, 13, über die die jeweils ersten Schenkel 2 und die zweiten Schenkel 4 mit einer Auswerteelektronik verbindbar sind, statt wie üblich zehn Kontaktstellen. Zwischen dem zweiten Ende des jeweils ersten Schenkels 2 und des zweiten Schenkels 4 ist eine elektrische Spannung U1, U2, U3, U4, U5 zwischen jeweils einem der fünf Thermoelement-Schenkelpaare messbar, wobei ein Referenzsensor zur Temperaturmessung außerhalb der Auswerteelektronik angeordnet ist. Der Referenzsensor weist einen ersten Widerstand 14 und einen zweiten Widerstand 16 auf, wobei der erste Widerstand 14 einen konstanten Widerstandswert und der zweite Widerstand 16 einen temperaturabhängigen Widerstandswert aufweist. Der erste Widerstand 14 und der zweite Widerstand 16 sind als Spannungsteiler zwischen dem zweiten Ende des jeweils ersten Schenkels 2 und des zweiten Schenkels 4 eines der fünf Thermoelemente angeordnet. Zwischen einer weiteren Kontaktstelle 10 und der Kontaktstelle 11 des zweiten Schenkels 4 eines Thermoelements kann dabei der Spannungsabfall U_ref über dem temperaturabhängigen Widerstand 16 gemessen werden, womit die vorliegende Temperatur an der Referenzstelle errechnet wird.

### Bezugszeichenliste (Teil der Beschreibung)

- 1: Messanordnung
- 2: Erster Schenkel
- 4: Zweiter Schenkel
- 6: Messstelle
- 7: Erste Kontaktstelle
- 8: Zweite Kontaktstelle
- 9: Dritte Kontaktstelle
- 10: Kontaktstelle des Referenzsensors
- 11: Vierte Kontaktstelle
- 12: Fünfte Kontaktstelle
- 13: Sechste Kontaktstelle
- 14: Erster Widerstand
- 16: Zweiter Widerstand

- U1: Spannung des ersten Thermoelements
- U2: Spannung des zweiten Thermoelements
- U3: Spannung des dritten Thermoelements
- U4: Spannung des vierten Thermoelements
- U5: Spannung des fünften Thermoelements
- U_ref: temperaturabhängiger Spannungsabfall über dem temperaturabhängigen Teilwiderstand

## Patentansprüche

1. Messanordnung (1) zur ortsaufgelösten Temperaturmessung, aufweisend eine Mehrzahl *n* an Thermoelementen, wobei jedes Thermoelement einen ersten Schenkel (2) aus einem ersten elektrisch leitfähigen Material und einen zweiten Schenkel (4) aus einem zweiten elektrisch leitfähigen Material aufweist, wobei der erste Schenkel (2) und der zweite Schenkel (4) jeweils an einem ersten Ende zu einer Messstelle (6) miteinander verbunden sind,
**dadurch gekennzeichnet, dass**
die Thermoelemente über ein zweites Ende des jeweils ersten Schenkels (2) und des zweiten Schenkels (4) mit einer Anzahl von höchstens *y* = *n* + 1 Kontaktstellen (7, 8, 9, 11, 12, 13) mit einer Auswerteelektronik verbindbar sind.

2. Messanordnung (1) nach Anspruch 1, wobei zwischen dem zweiten Ende des jeweils ersten Schenkels (2) und des zweiten Schenkels (4) eine elektrische Spannung (U1, U2, U3, U4, U5) messbar ist, wobei ein Referenzsensor zur Temperaturmessung außerhalb der Auswerteelektronik angeordnet ist,
**dadurch gekennzeichnet, dass**
der Referenzsensor einen ersten Widerstand (14) und einen zweiten Widerstand (16) aufweist, wobei der erste Widerstand (14) einen konstanten Widerstandswert und der zweite Widerstand (16) einen temperaturabhängigen Widerstandswert aufweist, wobei der Referenzsensor über eine weitere Kontaktstelle (10) mit der Auswerteelektronik verbindbar ist.

3. Messanordnung (1) nach Anspruch 2,
**dadurch gekennzeichnet, dass**
der erste Widerstand (14) und der zweite Widerstand (16) als Spannungsteiler zwischen dem zweiten Ende des jeweils ersten Schenkels (2) und des zweiten Schenkels (4) angeordnet sind.

4. Messanordnung (1) nach einem der vorhergehenden Ansprüche,
**dadurch gekennzeichnet, dass**
der zweite Schenkel (4) eines ersten Thermoelements den ersten Schenkel (2) eines zweiten Thermoelements bildet.

5. Messanordnung (1) nach einem der vorhergehenden Ansprüche,
**dadurch gekennzeichnet, dass**
die Schenkel (2, 4) der Thermoelemente als eine gedruckte und aushärtend getrocknete elektrisch leitfähige Struktur ausgebildet sind.

6. Mehrschichtige Verbundfolie, aufweisend zumindest eine elektrisch leitfähige Heizschicht und eine Messanordnung nach einem der Ansprüche 1 bis 5.
